Europäisches Patentamt

European Patent Office

Office européen des brevets

(19)

(11) **EP 0 733 531 B1**

(12) **EUROPÄISCHE PATENTSCHRIFT**

(45) Veröffentlichungstag und Bekanntmachung des Hinweises auf die Patenterteilung:
**27.10.1999 Patentblatt 1999/43**

(51) Int. Cl.$^6$: **B60T 8/00**, B60T 13/66

(21) Anmeldenummer: **96101381.0**

(22) Anmeldetag: **01.02.1996**

(54) **Verfahren zur Abbremsung eines Fahrzeuges**

Method for braking a vehicle

Procédé de freinage d'un véhicule

(84) Benannte Vertragsstaaten:
**DE FR GB IT SE**

(30) Priorität: **24.03.1995 DE 19510934**

(43) Veröffentlichungstag der Anmeldung:
**25.09.1996 Patentblatt 1996/39**

(73) Patentinhaber: **WABCO GmbH**
**30453 Hannover (DE)**

(72) Erfinder:
• **Stender, Axel**
**D-31787 Hameln (DE)**
• **Klein, Bodo**
**D-30890 Barsinghausen (DE)**
• **Wiehen, Christian, Dr.**
**D-30938 Burgwedel (DE)**
• **Witte, Norbert**
**D-31515 Wunstorf (DE)**

(74) Vertreter:
**Schrödter, Manfred, Dipl.-Ing.**
**WABCO GmbH**
**Postfach 91 12 80**
**30432 Hannover (DE)**

(56) Entgegenhaltungen:
| | |
|---|---|
| EP-A- 0 189 076 | EP-A- 0 509 225 |
| EP-A- 0 588 193 | WO-A-93/12962 |
| DE-A- 4 206 238 | DE-A- 4 206 240 |
| DE-A- 4 310 422 | US-A- 5 234 262 |

## Beschreibung

Die Erfindung betrifft ein Verfahren zur Abbremsung eines Fahrzeugs gemäß dem Oberbegriff der Patentansprüche 1 bis 4. Darin ist der Begriff "Energie" nicht streng physikalisch zu verstehen, sondern als Sammelbegriff für alle Medien, bei deren Zuführung eine Bremse eine Bremskraft erzeugt.

Der Begriff "Bremse" im Sinne der Erfindung soll nicht nur eine einzelne, unmittelbar eine Bremskraft erzeugende, Baugruppe, sondern auch eine Mehrzahl solcher Baugruppen, aber auch die einer oder mehreren solcher Baugruppen zugehörigen Systemkomponenten wie Betätigungs-, Steuer- und Übertragungseinrichtungen stromabwärts des vom Fahrzeugführer zu betätigenden Bedienungsorgans umfassen können. Eine "Bremse" im Sinne der Erfindung kann also durchaus auch ein Bremskreis als Teil des Fahrzeugbremssystems oder die vollständige Bremsanlage eines Einzel-Fahrzeugs in einem Fahrzeugzug sein.

Wird einer Bremse, ausgehend vom unbetätigten Zustand, Energie zugeführt, so beginnt die Erzeugung einer Bremskraft durch die Bremse (= Ansprechen der Bremse) erst, wenn die Energie schon einen gewissen Wert erreicht hat. Dieser Wert ist die Ansprechenergie. Er ist durch Ansprechwiderstände der unmittelbar die Bremskraft erzeugenden Baugruppen und, gegebenenfalls, der zwischen diesen und der Energieerfassungsstelle angeordneten Systemkomponenten bedingt. Die Ansprechwiderstände sind beispielsweise auf Reibung und Rückstellkräfte zurückzuführen.

Die Bremsen eines Fahrzeugs können, bauartbedingt, unterschiedliche Ansprechenergien aufweisen. In einem solchen Fall wird bei Teilbremsungen, d. h. bei Bremsungen mit geringer Ausnutzung des den Bremsen insgesamt zur Verfügung stehenden Energiepotentials, die Bremse mit der höchsten Ansprechenergie, also die zuletzt ansprechende Bremse, merklich weniger beansprucht als die früher ansprechende(n) Bremse(n) mit geringerer Ansprechenergie. Da im Fahrzeugbetrieb die weitaus meisten Bremsungen Teilbremsungen sind, folgt aus der höheren Beanspruchung der früher ansprechenden Bremse(n) ein höherer Verschleiß an deren Verschleißteilen, insbesondere also an deren Bremsbelägen und Bremstrommeln bzw. Bremsscheiben.

Ein Verfahren der eingangs genannten Art für Druck als Energie ist aus der EP-A-0 588 193 bekannt. Dieses sieht vor, den Bremsen von vornherein Energien zuzuführen, deren Werte so unterschiedlich sind, daß die Bremsen gleichzeitig ansprechen. Dadurch wird auch die Fahrstabilität verbessert.

Zur Ermittlung des Momentanwertes der Ansprechenergie sieht dieses Verfahren bei Beginn einer Bremsbetätigung die Erfassung der zugeführten Energie und der Lageänderung eines bei der Bremsbetätigung bewegten Übertragungsgliedes vor. Der Energiewert, von dem ab bei weiterer Energiezufuhr die Lageänderung des Übertragungsgliedes signifikant abnimmt, gibt die momentane Ansprechenergie an.

In der DE-A-43 10 422 ist ein Verfahren für Druck als Energie beschrieben, welches vorsieht, bei wenigstens einer Bremsbetätigung nur eine Bremse mit einer Energie oberhalb der geschätzten Ansprechenergie zu beaufschlagen, diese Energie und die dadurch erzielte Verzögerung zu erfassen und daraus sowie aus den Kenndaten der Bremse sowie der verzögerte Masse die Ansprechenergie der betreffenden Bremse zu berechnen.

Der Erfindung liegt die Aufgabe zugrunde, dem eingangs erwähnten Verfahren ein neues und einfaches Verfahren zur Ermittlung der momentanen Ansprechenergie zur Verfügung zu stellen.

Diese Aufgabe wird durch die in den Patentansprüchen 1 bis 4 angegebene Erfindung gelöst. Vorteilhafte Ausgestaltungen und Fortbildungen sind in den Unteransprüchen angegeben.

Die Erfindung ist mit jeder Art Energie durchführbar, beispielsweise mit elektrischer Energie oder Druck. Im Falle des Einsatzes von Druck sind als Energieträger flüssige oder gasförmige Druckmittel, z. B. Druckluft, gebräuchlich.

Es gibt aber Fälle, in denen sich die Ansprechenergie einer oder mehreren Bremsen im Fahrzeugbetrieb ändert. Das kann z. B. auf den Erhaltungs- und Wartungszustand der betreffenden Bremse(n), auf Veränderung von Materialeigenschaften sowie auf Änderungen der Bremsenbestückung zurückzuführen seien. Ein Fall der letztgenannten Art liegt beispielsweise vor, wenn das Fahrzeug aus einem Fahrzeugzug mit einem Motorwagen und einem oder mehreren Anhängern besteht und die Anhänger wechseln. Die Verwendung der Momentanenergie(n) sichert auch in derartigen Fällen die mit dem Verfahren erzielten Vorteile.

Weitere Vorteile der Erfindung werden in deren nunmehr folgender Erläuterung, die sich auf zeichnerische Darstellungen stützt, genannt.

Es zeigen:

Fig. 1        schematisch ein Fahrzeugbremssystem eines Fahrzeugzuges,

Fig. 2 und Fig. 3        Verläufe von Test-Bremsungen

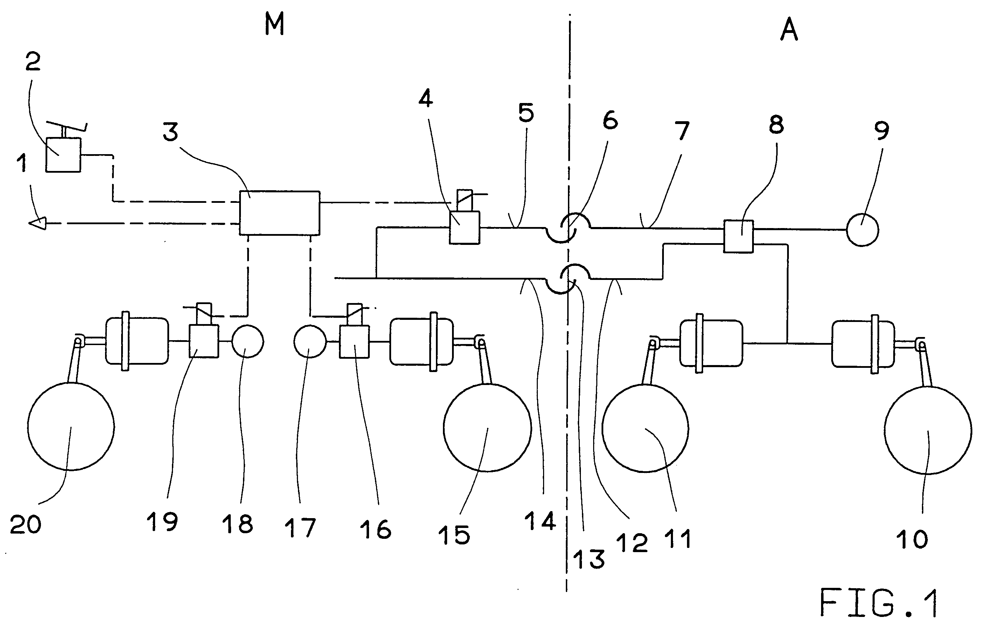

In Fig. 1 ist schematisch ein Fahrzeugbremssystem eines Fahzeugzuges dargestellt, welches Druck als Energie und Druckluft als Energieträger zur Betätigung der Bremsen einsetzt. Die im folgenden in Zusammenhang mit Druck und Druckluft gemachten Ausführungen gelten für andere Energien und Energieträger in entsprechender Anwendung.

Das dargestellte Fahrzeugbremssystem besteht aus einer generell mit (M) bezeichneten Motorwagenbremsanlage und einer generell mit (A) bezeichneten Anhängerbremsanlage, die in bekannter Weise über eine Vorratsleitung (12, 14) mit einem Vorratskupplungskopf (13) und eine Anhängerbremsleitung (5, 7) mit einem Bremskupplungskopf (6) untereinander verbunden sind.

Die Anhängerbremsanlage (A) weist an jeder Seite jeder Anhängerachse durch Druck betätigte Anhängerbremsen auf, von denen diejenigen einer Seite einschließlich der zugeordneten Bremszylinder und mechanischen Übertragungsteile mit den Bezugszeichen (10) und (11) angedeutet sind.

Als Steuereinrichtung weist die Anhängerbremsanlage (A) ein Anhängerbremsventil (8) auf. Die von der Motorwagenbremsanlage (M) über die Vorratsleitung (12, 14) auf den Anhänger übertragene Druckluft wird über das Anhängerbremsventil (8) einem Anhängervorrat (9) zugeführt. Der von der Motorwagenbremsanlage (M) über die Anhängerbremsleitung (5, 7) abgegebene Anhängerbremsdruck wird dem Anhängerbremsventil (8) zugeführt. Dieses verbindet bei Erhalt eines Anhängerbremsdrucks den Anhängervorrat (9) mit den Anhängerbremsen (10, 11) und läßt zu diesen aus dem Anhängervorrat (9) einen Druck durch, dessen Höhe von der Höhe des Anhängerbremsdrucks bestimmt ist.

Die Anhängerbremsanlage (A) entspricht somit einer üblichen Zweileitungs-Anhängerbremsanlage.

Die Motorwagenbremsanlage (M) weist an jeder Seite jeder Motorwagenachse durch Druck betätigte Motorwagenbremsen auf, von denen diejenigen einer Seite einschließlich der zugeordneten Bremszylinder und mechanischen Übertragungsteile mit den Bezugszeichen (15) und (20) angedeutet sind. Jeder Motorwagenbremse (15, 20) ist ein Motorwagenvorrat (17 bzw. 18) zugeordnet.

Die Motorwagenvorräte (17, 18) werden in üblicher Weise über getrennte und gegeneinander abgesicherte Leitungen von einer nicht dargestellten Druckluftbeschaffungsanlage auf dem Motorwagen mit Druckluft versorgt. Die Motorwagenbremsanlage (M) ist somit in üblicher Weise zweikreisig. Auch die Anhängervorratsleitung (12, 14) und damit der Anhängervorrat (9) werden in üblicher Weise über getrennte und abgesicherte Leitungen von der Druckluftbeschaffungsanlage versorgt.

Als vom Fahrzeugführer zu betätigendes Bedienungsorgan für das Fahrzeugbremssystem ist auf dem Motorwagen eine elektrische Steuereinrichtung vorgesehen. Diese besteht aus einem Bremswertgeber (2), einer Steuerelektronik (3), je einem elektrisch gesteuerten Druckmodulator (16 bzw. 19) für jede Motorwagenbremse (15 bzw. 20) und einem elektrisch gesteuerten Anhängersteuerventil (4).

Die Druckmodulatoren (16, 19) sind druckseitig jeweils zwischen einem Motorwagenvorrat (17 bzw. 18) und der zugeordneten Motorwagenbremse (15 bzw. 20) angeordnet. Das Anhängersteuerventil (4) ist druckseitig einerseits an die Anhängervorratsleitung (12, 14) und andererseits an die Anhängerbremsleitung (5, 7) angeschlossen.

Zwecks Betätigung des Fahrzeugbremssystems leitet der Fahrzeugführer über ein Betätigungsglied des Bremswertgebers (2), z. B. ein Pedal, ein Betätigungssignal in den Bremswertgeber (2) ein. Das Betätigungssignal kann eine Betätigungskraft auf das Betätigungsglied und/oder ein Betätigungsweg des Betätigungsgliedes sein. Der Bremswertgeber (2) gibt bei Erhalt des Betätigungssignals ein entsprechendes Sollwertsignal an die Steuerelektronik (3) ab. Diese bereitet das Sollwertsignal zu Druckanforderungssignalen für die Druckmodulatoren (16, 19) und für das Anhängersteuerventil (4) auf.

Jeder Druckmodulator (16, 19) verbindet bei Erhalt eines Druckanforderungssignals den zugeordneten Motorwagenvorrat (17 bzw. 18) mit der zugeordneten Bremse (15 bzw. 20) und hält diese Verbindung aufrecht, bis sich in der jeweiligen Bremse (15 bzw. 20) ein der Größe des Druckanforderungssignals entsprechender Druck aufgebaut hat. Das Anhängersteuerventil (4) verbindet bei Erhalt eines Druckanforderungssignals die Anhängervorratsleitung (12, 14) mit der Anhängerbremsleitung (5, 7), bis sich in letzterer ein von der Größe des Druckanforderungssignals abhängiger Anhängerbremsdruck aufgebaut hat. Die den Druckmodulatoren (16, 19) und dem Anhängersteuerventil (4) zugeführten Druckanforderungssignale sind also repräsentativ für die von diesen Geräten durchzulassenden Drücke. Allerdings verhalten sich die Druckanforderungssignale und die jeweils zugeordneten Drücke nicht stets gleichsinnig. Während die Druckanforderungssignale praktisch auf ihre durch das Sollwertsignal vorgegebenen Werte springen, stellen sich die entsprechenden Drücke verzögert ein; mit anderen Worten: die Drücke eilen dem jeweils zugeordneten Druckanforderungssignal nach. Dies beruht einerseits auf der gegenüber der Fortpflanzungsgeschwindigkeit elektrischer Signale wesentlich geringeren Fortpflanzungsgeschwindigkeit des Drucks und andererseits auf den auf den Druck aufzufüllenden Volumina sowie der Trägheit der Druckmodulatoren (16, 19) und des Anhängersteuerventils (4).

Beendet oder reduziert der Fahrzeugführer die Betätigung des Fahrzeugbremssystems durch Aufhebung bzw. Reduzierung des Betätigungssignals in den Bremswertgeber (2), löscht bzw. reduziert die Steuerelektronik (3) die Druckanforderungssignale mit dem Ergebnis, daß die Druckmodulatoren (16, 19) und das Anhängersteuerventil (4) die zuvor durchgelassenen Drücke - wieder dem Druckanforderungssignal nacheilend - abfallen lassen.

Bei der Aufbereitung des Sollwertsignals zu den Druckanforderungssignalen kann die Steuerelektronik (3) in üblicher Weise weitere zugeführte Informationen, beispielsweise den Beladungszustand von Motorwagen und/oder Anhänger, die Auslastung der Motorwagenachsen, die Kraft in der Verbindung zwischen Motorwagen und Anhänger, berücksichtigen.

Deshalb können die einzelnen Druckanforderungssignale und die zugeordneten Drücke unterschiedlich sein.

Im bisher beschriebenen Umfang ist das Fahrzeugbremssystem ein übliches elektrisch gesteuertes Fahrzeugbremssystem.

Dieses Fahrzeugbremssystem ermöglicht außerdem eine Druckverteilung zwischen den Bremsen nach Maßgabe der Ansprechdrücke derselben. Dabei seien zunächst unter "Bremse" die vollständige Anhängerbremsanlage (A) für sich und jeweils ein Bremskreis der Motorwagenbremsanlage (M), bestehend aus Motorwagenvorrat (17 bzw. 18), Druckmodulator (16 bzw. 19) und Motorwagenbremse (15 bzw. 20) verstanden.

Wegen der oben erwähnten Abhängigkeit der Drücke von den Druckanforderungssignalen gibt es auch den auf beliebige Weise ermittelten Ansprechdrücken der vorstehend definierten Bremsen zugeordnete Ansprech-Druckanforderungssignale.

Zum Zwecke der oben erwähnten Druckverteilung nach Maßgabe der Ansprechdrücke ist in der Steuerelektronik (3) ein Speicher installiert, in den die Ansprech-Druckanforderungssignale eingegeben sind. Außerdem ist zu diesem Zweck die Steuerelektronik (3) so programmiert, daß sie beim Beginn einer Bremsung die Druckanforderungssignale nicht von null aufbaut, sondern sofort die Ansprech-Druckanforderungssignale ausgibt. Zur Erläuterung an einem Zahlenbeispiel seien die folgenden Ansprechdrücke angenommen:

Bremskreis (17, 16, 15)     0,5 bar
Bremskreis (18, 19, 20)     0,8 bar
Anhängerbremsanlage (A) 1,0 bar

Dann stellt die Steuerelektronik 3 beim Beginn einer Bremsung die Druckanforderungssignale sofort entsprechend den Werten 0,5 bar, 0,8 bar, 1,0 bar ein. Dementsprechend nehmen beim Beginn einer Bremsung die den Motorwagenbremsen (15, 20) zugeführten Drücke sowie der Anhängerbremsdruck die Werte des jeweiligen Ansprechdrucks an. Als Folge sprechen alle oben definierten Bremsen gleichzeitig an, wodurch das Fahrzeugbremssystem die Voraussetzung für einen gleichmäßigen Verschleiß an den genannten Bremsen beinhaltet.

Hinsichtlich des weiteren Verlaufs der Druckanforderungssignale und damit der Drücke kann die Steuerelektronik (3) so programmiert sein, daß sie bei steigendem Sollwertsignal die oben ersichtlichen Unterschiede entsprechend den Ansprechdrücken entweder aufrechterhält oder abbaut.

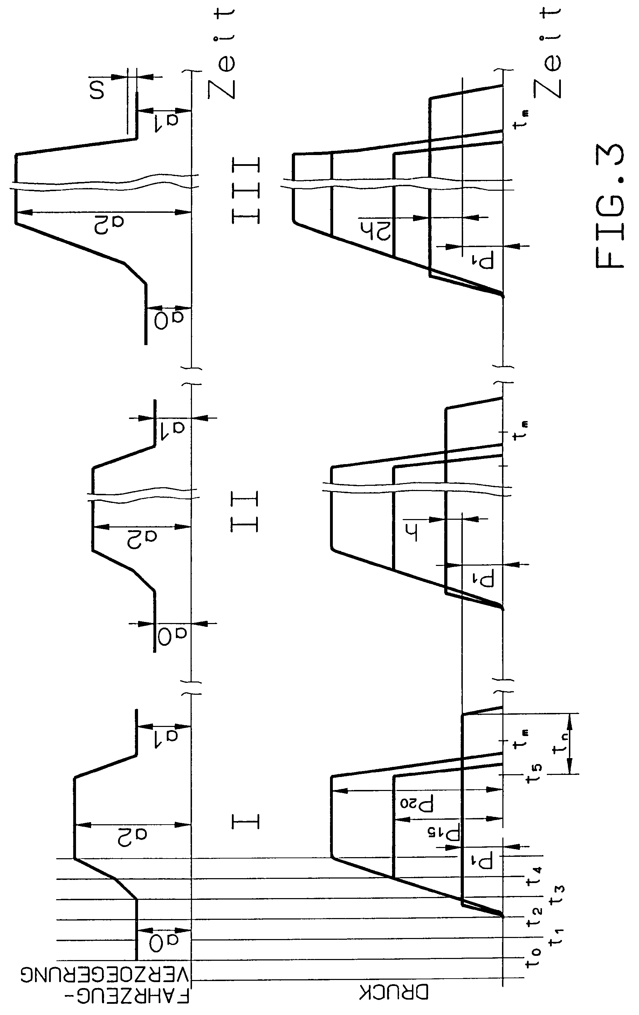

Der vorstehend verwendete Begriff "Beginn einer Bremsung" bedarf der Erläuterung. Der Bremswertgeber (2) hat eine "Ansprechzeit". Das ist der Zeitverzug, der, bedingt durch den Leerweg des Bremswertgebers (2), zwischen dem ersten Einwirken des Fahrzeugführer auf den Bremswertgeber (2) (Zeitpunkt t0 in Fig. 3) und der ersten Abgabe eines Sollwertsignals in einem Zeitpunkt (t2 in Fig. 3) durch den Bremswertgeber (2) auftritt. Innerhalb dieser Ansprechzeit wird dem Bremswertgeber (2) üblicherweise zu einem Zeitpunkt (t1 in Fig. 3) ein Bremslicht-Schaltsignal entnommen. In die Steuerelektronik (3) können nun als "Beginn einer Bremsung" der Zeitpunkt der ersten Abgabe eines Sollwertsignals, also das Ende der Ansprechzeit (t2), oder ein anderer Zeitpunkt innerhalb der Ansprechzeit, beispielsweise der Zeitpunkt (t1), programmiert werden. Es ist auch der Ansatz unterschiedlicher Zeitpunkte für die einzelnen Bremsen möglich, beispielsweise ein früherer Zeitpunkt für die Anhängerbremsanlage (A) und ein oder mehrere spätere Zeitpunkte für die Bremskreise der Motorwagenbremsanlage (M). Dadurch wird die Möglichkeit weiterer Optimierung des Ansprechverhaltens des dargestellten Fahrzeugbremssystems eröffnet.

Nun sei angenommen, der Ansprechdruck der Anhängerbremsanlage (A) ändere sich im Fahrzeugbetrieb. Ein solcher Fall tritt beispielsweise auf, wenn ein Motorwagen mit wechselnden Anhängern eingesetzt wird und deren Anhängerbremsanlagen (A), wie üblich, unterschiedliche Ansprechdrücke aufweisen.

Für einen solchen Fall kann das beschriebene Fahrzeugbremssystem so fortgebildet werden, daß es den jeweiligen Momentanwert des Ansprechdrucks der Anhängerbremsanlage (A) mißt und diesen Momentanwert der beschriebenen Einstellung der Ansprech-Druckanforderungssignale und damit der Druckverteilung zugrunde legt.

Wie im folgenden näher beschrieben, ermittelt in dieser Fortbildung die Steuerelektronik (3) zunächst den Momentanwert des Ansprechdrucks des neu angekoppelten Anhängers und nimmt anschließend eine Anpassung des Druckanforderungssignals zu dem Anhängersteuerventil (4) vor.

Über den bisher beschriebenen Umfang des Fahrzeugbremssystems hinaus setzt diese Fortbildung eine Möglichkeit voraus, die Fahrzeugzugverzögerung zu ermitteln. Dazu kann als zusätzliche Einrichtung ein Verzögerungssensor, wie er mit dem Bezugszeichen (1) angedeutet ist, erforderlich sein.

Werden aber in der Fahrzeugbremsanlage oder in dem Fahrzeugzug aus anderen Gründen schon fahrzeugwegabhängige und/oder fahrzeuggeschwindigkeitsabhängige Signale erzeugt und/oder verarbeitet, so bedarf es eines zusätzlichen Verzögerungssensors nicht. Ein solcher Fall ist beispielsweise gegeben, wenn die Fahrzeugbremsanlage eine Blockierschutzeinrichtung (ABS) aufweist, die der Fahrzeugzugverzögerung entsprechende Radverzögerungssignale zur Verfügung stellt. Ein anderer solcher Fall ist beispielsweise gegeben, wenn im Fahrzeugzug ein Tachosignal gewonnen wird, aus dem die Steuerelektronik (3) die Fahrzeugzugverzögerung errechnen kann.

In einer ersten Alternative erfolgt die Ermittlung des genannten Momentanwertes in reinen Test-Bremsungen, in denen der Fahrzeugführer das Fahrzeugbremssystem nicht betätigt. Zu diesem Zweck sind in der Steuerelektronik Merkmale programmiert, anhand derer diese geeignete Zeitpunkte für die Durchführung von Test-Bremsungen erkennen kann. Außerdem ist zu diesem Zweck die Steuerelektronik (3) so programmiert, daß sie bei Änderungen dieser Merkmale vor einem weiter unten näher erläuterten Meßzeitpunkt (tm) die Test-Bremsung abbricht. Die Steuerelektronik (3) kann des weiteren so programmiert sein, daß sie nicht bei jedem Vorliegen dieser Merkmale, sondern nur bei ausgewählten Gelegenheiten, beispielsweise bei jedem x-ten oder durch einen Zufallsgenerator bestimmten Mal, auf eine Test-Bremsung erkennt. Beispielsweise können solche Merkmale vorliegen, wenn der Fahrzeugführer das Fahrpedal (Gaspedal) losläßt, aber nicht den Bremswertgeber (2) betätigt.

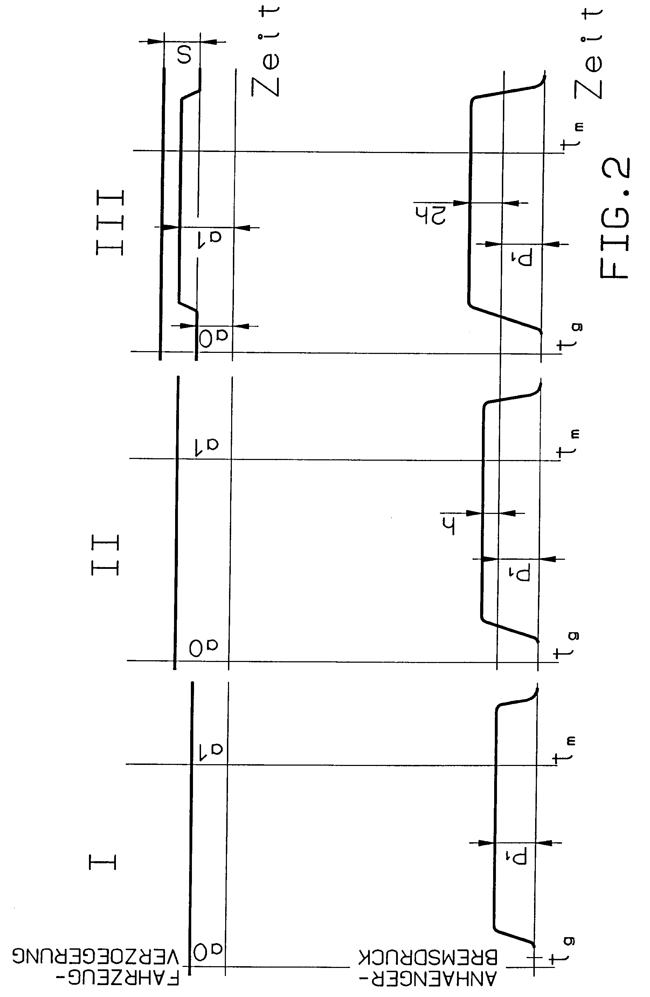

Fig. 2 zeigt für diese Alternative in Abhängigkeit von der Zeit in der unteren Bildhälfte die idealisierten Verläufe des Anhängerbremsdrucks und in der oberen Bildhälfte die idealisierten Verläufe der Fahrzeugzugverzögerung in drei Testbremsungen I, II und III.

Nach dem Erkennen auf eine Test-Bremsung erfaßt die Steuerelektronik (3) zu einem Zeitpunkt (tg) die vorhandene Fahrzeugzugverzögerung als Grund-Fahrzeugverzögerung (a0).

Eine Grund-Fahrzeugverzögerung (a0) kann verschiedene Ursachen haben. Sie kann beispielsweise auf Fahrwiderstände, Fahrbahnbedingungen (Steigung, Gefälle), eine Motorbremswirkung, eine Retarderbremswirkung zurückzuführen sein.

Nach dem Erfassen der Grund-Fahrzeugverzögerung (a0) gibt die Steuerelektronik (3) an das Anhängersteuerventil (4) ein Druckanforderungssignal ab, welches einen geringen Test-Anhängerbremsdruck (p1), beispielsweise von 0,5 bar, fordert. Wegen der bereits erwähnten Abhängigkeit (mit Nacheilung) des Anhängerbremsdrucks von dem Druckanforderungssignal könnte letzteres ebenfalls mit (p1) bezeichnet werden. Die Nacheilung drückt sich in Fig. 2 darin aus, daß der Anhängerbremsdruck nicht auf den Wert des Test-Anhängerbremsdrucks (p1) springt, sondern stetig auf diesen ansteigt.

Sodann erfaßt die Steuerelektronik (3) zu einem vorbestimmten Meßzeitpunkt (tm) die nach der Zuführung des Test-Anhängerbremsdrucks (p1) und der entsprechenden Druckzuführung zu den Anhängerbremsen (10, 11) vorhandene Fahrzeugzugverzögerung als Test-Fahrzeugverzögerung (a1). Der Zeitpunkt (tm) ist mittels des Zeitgebers der Steuerelektronik (3) in letzterer programmiert. Dabei ist der Meßzeitpunkt (tm) so vorbestimmt, daß nach der Erfahrung in diesem Zeitpunkt der Druckaufbau in den Anhängerbremsen (10, 11) mit Sicherheit zum Abschluß gekommen ist.

Hat der Test-Anhängerbremsdruck (p1) den Momentanwert des Ansprechdrucks der Anhängerbremsanlage (A) überschritten, so äußert sich dies dadurch, daß die Test-Fahrzeugverzögerung (a1) größer als die Grund-Fahrzeugverzögerung (a0) ist. Hat der Test-Anhängerbremsdruck (p1) den gesuchten Momentanwert nicht erreicht oder gerade erreicht, so ist die Test-Fahrzeugverzögerung (a1) nicht größer als die Grund-Fahrzeugverzögerung (a0).

Um dies zu überprüfen, vergleicht die Steuerelektronik (3) die im Zeitpunkt (tg) erfaßte Grund-Fahrzeugverzögerung (a0) und die im Meßzeitpunkt (tm) erfaßte Test-Fahrzeugverzögerung (a1).

Dieser Vergleich ergibt, wie die Darstellung erkennen läßt, bei der Test-Bremsung I Gleichheit zwischen (a1) und (a0). Dieses Ergebnis läßt nur die Aussage zu, daß der Test-Anhängerbremsdruck (p1) den gesuchten Momentanwert nicht überschritten hat. Eine Aussage, ob der Test-Anhängerbremsdruck (p1) noch unterhalb des gesuchten Momentanwertes liegt oder diesen gerade erreicht hat, läßt dieses Ergebnis nicht zu. Deshalb ist, wie weiter unten näher ausgeführt wird, die Steuerelektronik (3) so programmiert, daß sie auf das Erreichen des gesuchten Momentanwertes erkennt, wenn der Test-Anhängerbremsdruck im Rahmen eines vorbestimmten Toleranzwertes (s) den wahren Momentanwert des Ansprechdrucks überschritten hat.

Nach dem Meßzeitpunkt (tm) löscht die Steuerelektronik (3) das Druckanforderungssignal, so daß sich der Test-Anhängerbremsdruck (p1) und damit die entsprechenden Drücke in den Anhängerbremsen (10, 11) abbauen können.

Wenn jetzt die Merkmale der Test-Bremsung noch vorliegen oder wenn diese später erneut vorliegen, erkennt die Steuerelektronik (3) auf eine zweite Test-Bremsung II, in der sie die in der Test-Bremsung I durchgeführten Schritte wiederholt, dabei aber den Test-Anhängerbremsdruck um einen vorbestimmten Schritt (h) erhöht. (h) kann beispielsweise 0,2 · p1 betragen. Mit dem für die Test-Bremsung I beispielhaft angenommenen Zahlenwert für p1 von 0,5 bar ist (h) also 0,1 bar und der Test-Anhängerbremsdruck in Test-Bremsung II 0,6 bar.

Wie die Darstellung erkennen läßt, ist in Test-Bremsung II die Grund-Fahrzeugverzögerung (a0) größer als in Test-Bremsung I. Dies ist auf andere Ausgangsbedingungen zurückzuführen, z. B. eine größere Fahrbahnsteigung, und spielt vorliegend keine Rolle, weil es für die Ermittlung des gesuchten Momentanwertes auf die absolute Höhe der erfaßten Fahrzeugverzögerungen nicht ankommt. Wie die Darstellung zeigt, hat auch in Test-Bremsung II der erhöhte Test-Anhängerbremsdruck von 1,2 · p1 nicht zu einer Erhöhung der Fahrzeugzugverzögerung geführt, also den gesuchten Momentanwert nicht oder gerade erreicht.

Nunmehr wiederholt die Steuerelektronik (3) in einer dritten Testbremsung III die früheren Schritte mit einem um 2h erhöhten Test-Anhängerbremsdruck, der nun den Wert 1,4 p1 (= 0,7) bar hat. Die Darstellung zeigt, daß bei dieser Testbremsung die Grund-Fahrzeugzugverzögerung (a0) wieder anders als bei den früheren Test-Bremsungen ist. Außerdem zeigt die Darstellung, daß nunmehr die Test-Fahrzeugverzögerung (a1) die Grund-Fahrzeugverzögerung (a0) überwiegt, die Steuerelektronik (3) folglich feststellt a1>a0. In Test-Bremsung III hat der Test-Anhängerbremsdruck von 1,4 p1 also den gesuchten Momentanwert überschritten.

Nunmehr muß die Steuerelektronik (3) prüfen, ob sie den Test-Anhängerbremsdruck von 1,4 • p1 der Test-Bremsung III als den gesuchten Momentanwert erkennen darf. Zu diesem Zweck vergleicht die Steuerelektronik (3) die Differenz (a1-a0) mit dem ihr einprogrammierten Toleranzwert (s). Laut Darstellung ist (a1-a0)<s . Die Steuerelektronik (3) darf also den bei der Test-Bremsung III angewandten Test-Anhängerbremsdruck als den gesuchten Momentanwert des Ansprechdrucks der Anhängerbremsanlage (A) erkennen. Dies würde auch im Falle (a1-a0)=s gelten.

Nun sei angenommen, die Steuerelektronik (3) habe bei der Test-Bremsung III festgestellt, daß die Differenz (a1-a0) den Toleranzwert (s) übersteigt, also (a1-a0)>s . Für diesen Fall ist die Steuerelektronik (3) so programmiert, daß sie bei einer oder mehreren weiteren Test-Bremsungen die beschriebenen Schritte wiederholt, dabei aber den letzten Test-Anhängerbremsdruck von 1,4 p1 in Schritten wieder mindert, bis die Differenz (a1-a0) zwischen 0 und einschließlich s liegt, also bis sie 0<(a1-a0)≤s feststellt. Damit in diesem Fall andere Test-Anhängerbremsdrücke als vorher möglich sind, ist es ratsam, bei der Minderung eine andere Schrittweite für den Schritt (h) als vorher vorzusehen, beispielsweise von 0,1 • p1.

Nun sei angenommen, die Steuerelektronik (3) habe schon bei der Test-Bremsung I eine den Toleranzwert (s) übersteigende Differenz (a1-a0), also (a1-a0)>s , festgestellt. Für diesen Fall ist die Steuerelektronik (3) so programmiert, daß sie bei der zweiten, dritten usw. Test-Bremsung den Test-Anhängerbremsdruck, wie vorstehend beschrieben, schrittweise mindert, bis sie 0<(a1-a0)≤s feststellt. Allerdings könnte in diesem Fall die Schrittweite wieder, beispielsweise, 0,2 • p1 betragen. Würde die Steuerelektronik (3) in diesem Fall bei der Durchführung der Test-Bremsungen mit gemindertem Test-Anhängerbremsdruck eine Gleichheit zwischen (a1) und (a0), also (a1-a0)=0 , feststellen, würde sie die im Zusammenhang mit den Test-Bremsungen I-III beschriebenen Schritte wiederholen.

Es liegt auf der Hand, daß durch geeignete Festlegung des Toleranzwertes (s) und der Weite der Steigerungs- bzw. Minderungsschritte der ermittelte Momentanwert des Ansprechdrucks mit praktisch beliebiger Genauigkeit an den wahren Momentanwert des Ansprechdrucks angenähert werden kann.

In nicht dargestellter Weise kann die Steuerelektronik (3) auch so ausgebildet werden, daß sie die Grund-Fahrzeugverzögerung (a0) nicht zu dem vor dem Meßzeitpunkt (tm) liegenden Zeitpunkt (tg), sondern zu einem nach dem Meßzeitpunkt (tm) liegenden Zeitpunkt erfaßt, in dem das Druckanforderungssignal gelöscht und der Test-Anhängerbremsdruck sowie die entsprechenden Drücke der Anhängerbremsen (10, 11) vollständig abgefallen sind.

Es sei noch darauf hingewiesen, daß der Fahrzeugführer die Test-Bremsungen überhaupt nicht wahrnimmt, wenn der Test-Anhängerbremsdruck den gesuchten Momentanwert des Ansprechdrucks nicht übersteigt. Übersteigt der Test-Anhängerbremsdruck den gesuchten Momentanwert, kann der Fahrzeugführer die betreffende Test-Bremsung wahrnehmen. Da die in diesem Fall auftretende Differenz (a1-a0) jedoch sehr gering ist, wird der Fahrzeugführer aber auch in diesem Fall die Test-Bremsung praktisch kaum wahrnehmen, dies um so weniger, als diese Wahrnehmung in der Regel ja vor dem Hintergrund der üblichen betrieblichen Ungleichförmigkeiten der Fahrzeuggeschwindigkeit erfolgen müßte.

In einer zweiten Alternative, die anhand der Fig. 3 mit idealisierten Verläufen der Drücke und der Fahrzeugzugverzögerung erläutert wird, sind die Test-Bremsungen I, II, III in von dem Fahrzeugführer ausgelöste Wirkbremsungen integriert. Da, wie aus dem folgenden hervorgeht, die Anhängerbremsanlage (A) bei diesen Wirkbremsungen keine oder nur eine sehr geringe Bremswirkung erzeugt, ist es zweckmäßig, die Steuerelektronik (3) so zu programmieren, daß sie auf Test-Bremsungen nur erkennt, wenn der Fahrzeugführer das Fahrzeugbremssystem im unteren Teilbremsbereich, d. h. mit einem geringen Betätigungssignal und entsprechend geringem Druckniveau betätigt.

In dieser Alternative können in allgemeiner Form der Test-Anhängerbremsdruck (p1)als erster Druck und der in der Motorwagenbremsanlage wirkende Druck als zweiter Druck bezeichnet werden. Auch wenn, wie im folgenden, in den Bremskreisen der Motorwagenbremsanlage unterschiedliche Drücke wirken, können diese bei der Ermittlung des Momentanwertes des Ansprechdrucks der Anhängerbremsanlage (A) zusammenfassend als ein zweiter Druck angesehen werden, weil die Zahl der Drücke in der Motorwagenbremsanlage (M) hinsichtlich des Ermittlungsergebnisses unbeachtlich ist.

Der Zeitpunkt für die Erfassung der Grund-Fahrzeugverzögerung (a0) soll in dieser Alternative zunächst innerhalb der Ansprechzeit des Bremswertgebers (2) liegen, und zwar werde zu dem Zeitpunkt (t1) das Bremslicht-Schaltsignal als Auslösesignal für die Erfassung der Grund-Fahrzeugverzögerung (a0) herangezogen.

Die Steuerelektronik (3) sei so programmiert, daß sie nach Ablauf der Ansprechzeit des Bresmwertgebers (2) im Zeitpunkt (t2) an das Anhängersteuerventil (4) das dem Test-Anhängerbremsdruck (p1) entsprechende Druckanforderungssignal abgibt, welches von dem durch den Fahrzeugführer in dem Bremswertgeber (2) eingeleiteten Betätigungssignal unabhängig ist. Gleichzeitig gebe die Steuerelektronik (3) an die Druckmodulatoren (16, 19) der Motorwagenbremsanlage (M) die Ansprech-Druckanforderungssignale ab, und anschließend Druckanforderungssignale, die von dem Betätigungssignal, welches der Fahrzeugführer in dem Bremswertgeber (2) eingeleitet hat, abhängig sind. Diesen Druckanforderungssignalen entsprechen Drücke (p15, p20) in den Motorwagenbremsen (15, 20).

Im Zeitpunkt (t2) beginnt der Aufbau des Test-Anhängerbremsdrucks (p1) und der Drücke (p15, p20). In einem Zeitpunkt (t3) hat der Druck (p15) den Wert des Ansprechdrucks des zugeordneten Bremskreises (17, 16, 15) der Motorwagenbremsanlage (M) erreicht. In diesem Zeitpunkt steigt die Fahrzeugzugverzögerung, ausgehend von der Grund-Fahrzeugverzögerung (a0), an. In einem Zeitpunkt (t4) hat der Druck (p20) den Wert des Ansprechdrucks des zugeordneten Bremskreises (18, 19, 20) der Motorwagenbremsanlage (M) erreicht. Ab diesem Zeitpunkt steigt die Fahrzeugzugverzögerung schneller. Nach dem vollständigen Aufbau der Drücke (p15, p20) in den Motorwagenbremsen (15, 20) und des Test-Anhängerbremsdrucks (p1) sowie der entsprechenden Drücke in den Anhängerbremsen (10, 11) wird der Fahrzeugzug mit einer Wirkverzögerung (a2) gebremst.

Die den Druckanforderungssignalen und damit dem Sollwertsignal entsprechenden Endwerte der Drücke (p15, p20) in den Motorwagenbremsen (15, 20) sind unterschiedlich hoch dargestellt. Dem liegt die Annahme zugrunde, daß die Steuerelektronik (3) bei der Aufbereitung der Druckanforderungssignale für die Druckmodulatoren (16, 19) unterschiedliche Informationen verarbeitet. Wenn die Steuerelektronik (3) hierzu nicht ausgebildet oder die Informationen entsprechend sind, können die Endwerte der Drücke (p15, p20) auch gleich sein. Der Darstellung liegt auch die Annahme zugrunde, daß die Bremskreise der Motorwagenbremsanlage (M) unterschiedliche Ansprechdrücke aufweisen. Diese können aber auch gleich sein bzw. so geringfügig voneinander abweichen, daß sie gleich angenommen werden können.

In einem Zeitpunkt (t5) beendet der Fahrzeugführer die Betätigung des Fahrzeugbremssystems durch Aufhebung des Bremsbetätigungssignals in den Bremswertgeber (2) mit dem Ergebnis, daß die Druckanforderungssignale zu den Druckmodulatoren (16, 19) erlöschen und die Drücke (p15, p20) abzufallen beginnen. Das Druckanforderungssignal zu dem Anhängersteuerventil (4) hält die Steuerelektronik (3) gemäß der Erfindung nach dem Zeitpunkt (t5) aber noch für eine vorbestimmte Nachlaufzeit (tn) aufrecht. Die Dauer der Nachlaufzeit (tn) ist so bemessen, daß in ihr nach der Erfahrung der vollständige Abfall der Drücke (p15, p20) erfolgt und außerdem anschließend der Meßzeitpunkt (tm) liegen kann.

Mit den Drücken (p15, p20) fällt auch die von diesen verursachte Wirkfahrzeugverzögerung (a2) ab.

Nach dem vollen Abfall der Drücke (p15, p20) ist die Fahrzeugzugverzögerung auf den Wert der Test-Fahrzeugverzögerung (a1) abgefallen, den die Steuerelektronik (3) im Meßzeitpunkt (tm) erfaßt.

Anschließend an die Erfassung der Test-Fahrzeugverzögerung (a1) verfährt die Steuerelektronik (3) zur Ermittlung des Momentanwertes des Ansprechdrucks der Anhängerbremsanlage (A) wie weiter oben im Zusammenhang mit der ersten Alternative beschrieben.

Aus Fig. 3 geht hervor, daß bei der Test-Bremsung I die Test-Fahrzeugverzögerung (a1) die Grund-Fahrzeugverzögerung (a0) nicht überschreitet, also unklar ist, ob der Test-Anhängerbremsdruck den gesuchten Momentanwert des Ansprechdrucks erreicht hat. Bei der Testbremsung II ist der Test-Anhängerbremsdruck um den Schritt (h) erhöht, die Test-Fahrzeugverzögerung (a1) aber trotzdem nicht größer als die Grund-Fahrzeugverzögerung (a0); die Unklarheit über das Erreichen des gesuchten Momentanwertes besteht also noch immer. Erst bei der Test-Bremsung III, in der der Test-Anhängerbremsdruck um (2h) erhöht ist, ist die Test-Fahrzeugverzögerung (a1) größer als die Grund-Fahrzeugverzögerung (a0), der gesuchte Momentanwertes also überschritten. Der Darstellung läßt sich ferner entnehmen, daß bei der Test-Bremsung III die Differenz zwischen der Test-Fahrzeugverzögerung (a1) und der Grund-Fahrzeugverzögerung (a0) kleiner als der Toleranzwert (s) ist, also (a1-a0)<s, mithin die Steuerelektronik (3) den in dieser Test-Bremsung angewandten Test-Anhängerbremsdruck in Höhe von $1,4 \cdot p1$ als den gesuchten Momentanwert des Ansprechdrucks erkennen kann.

In der soeben beschriebenen zweiten Alternative kann die Grund-Fahrzeugverzögerung (a0) in nicht dargestellter Weise statt im Zeitpunkt (t1) zu Beginn einer Wirkbremsung auch nach Ablauf der Nachlaufzeit (tn), also am Schluß der Test-Bremsung, vorgenommen werden.

In beiden beschriebenen Alternativen kann die Steuerelektronik (3) auch so programmiert sein, daß sie die Fahrzeugzugverzögerung ständig erfaßt und die in den Zeitpunkten (tg, t1, tm) und gegebenenfalls später vorhandenen Momentanwerte als Grund- bzw. Test-Fahrzeugverzögerung (a0 bzw. a1) auswertet.

Das vorstehend über die Ermittlung des Momentanwertes des Ansprechdrucks der Anhängerbremsanlage (A) Ausgeführte läßt sich auf die Ermittlung des Momentanwertes des Ansprechdrucks der Motorwagenbremsanlage (M) als Bremse und ihrer einzelnen Bremskreise übertragen.

Beispielsweise sei angenommen, der Momentanwert des Ansprechdrucks des Bremskreises (18, 19, 20) solle ermittelt werden. Dann muß die Steuerelektronik (3) mit dem Druckanforderungssignal zu dem diesem Bremskreis zugeordneten Druckmodulator (19) und dem zugeordneten Druck (p20) wie vorstehend mit dem Druckanforderungssignal zu dem Anhängersteuerventil (4) und dem Test-Anhängerbremsdruck (p1) verfahren. In der Alternative mit Integration der Test-Bremsung in eine Wirkbremsung sind in diesem Beispiel der Druck (p20) der erste Druck und der Druck (p15) der zweite Druck.

Es liegt auf der Hand, daß sich die Ermittlung des Momentanwertes des Ansprechdrucks der Motorwagenbremsanlage (M) und ihrer Bremskreise wie beschrieben auch ohne das Vorhandensein eines Anhängers bzw. einer Anhängerbremsanlage durchführen läßt.

In die bisher abgehandelten Ansprechdrücke bzw. Momentanwerte gehen alle hinter dem jeweiligen Druckanforderungssignal auftretenden Ansprechwiderstände ein. Dies sind im Falle der Anhängerbremsanlage (A) die Ansprechwiderstände des Anhängersteuerventils (4), des Anhängerbremsventils (8) sowie der Anhängerbremsen (10, 11) und im Falle z. B. des Bremskreises (18, 19, 20) der Motorwagenbremsanlage (M) die Ansprechwiderstände des Druckmodulators (19) und der Motorwagenbremse (20). Sind, wie üblich und nicht dargestellt, weitere Einrichtungen in den genannten Bremsanlagen vorgesehen, z. B. automatischer Bremskraftregler (ALB), Relaisventile, Druckbegrenzungsventile usw., gehen auch deren Ansprechwiderstände in die ermittelten Ansprechdrücke ein.

Es ist aber möglich, bei der Ermittlung eines Ansprechdruckes die Ansprechwiderstände bestimmter oder aller den Motorwagenbremsen und den Anhängerbremsen zugehörigen Systemkomponenten auszuschalten. Zu diesem Zweck muß stromabwärts der auszuschaltenden Systemkomponenten ein elektrischer Drucksensor angeordnet und elektrisch mit der Steuerelektronik (3) verbunden werden. Häufig ist dieser Aufwand aber nicht erforderlich, weil ein bzw. mehrere solche Drucksensoren aus anderen Gründen vorhanden sind, beispielsweise bedingt durch die vorhandene Druckmodulator-Bauart. Die Steuerelektronik (3) muß zum gleichen Zweck so programmiert werden, daß sie die Druckanforderungssignale zu dem Anhängersteuerventil (4) bzw. den Druckmodulatoren (16, 19) bzw. dem jeweiligen Druckmodulator (16) bzw. (19) so bemißt, daß die den bisher erwähnten Test-Anhängerbremsdrücken entsprechenden Drücke an dem Drucksensor auftreten und von diesem gemessen werden. Beispielsweise sei angenommen, der Ansprechdruck der Motorwagenbremse (20) solle ermittelt werden. Dann muß der vorstehend erwähnte Drucksensor an dem zugehörigen Bremszylinder oder an einem diesem unmittelbar Druck zuführenden Bauteil (z. B. Druckleitung, Ausgang des Druckmodulators) angeordnet sein. Die Steuerelektronik (3) stellt dann in den Test-Bremsungen gemäß den oben beschriebenen Alternativen das Druckanforderungssignal zu dem Druckmodulator (19) so ein, daß der erwähnte Drucksensor gerade den Test-Druck mißt und der Steuerelektronik (3) meldet.

Im übrigen gelten die vorstehend für eine Alternative gemachten Ausführungen, sofern sich aus diesen nichts Widersprechendes ergibt, für die andere Alternative direkt oder in entsprechender Anwendung mit.

Der Fachmann erkennt auch, daß der Schutzbereich der Erfindung sich nicht in den vorstehend beispielhaft beschriebenen Ausführungen und Anwendungsmöglichkeiten erschöpft, sondern alle Ausgestaltungen und Anwendungsmöglichkeiten erfaßt, die sich den Patentansprüchen unterordnen. Insbesondere soll dieser Schutzbereich sich auch auf nicht elektrisch gesteuerte Fahrzeuge erstrecken, d. h. auf solche in herkömmlicher Bauweise mit Motorwagen-Bremsventil bzw. durch Druck gesteuertem Anhänger-Steuerventil.

**Patentansprüche**

1. Verfahren zur Abbremsung eines Fahrzeugs mit wenigstens zwei durch Zufuhr von Energie betätigten Bremsen (M, A), welches die Verteilung der Energie auf die Bremsen (M, A) nach Maßgabe der Ansprechenergien der Bremsen vornimmt, wobei Energie einen Sammelbegriff für alle Medien bedeutet, bei deren Zuführung eine Bremse eine Bremskraft erzeugt und wobei der Verteilung der Energie der bei wenigstens einer Bremsbetätigung ermittelte Momentanwert der Ansprechenergie wenigstens einer der Bremsen zugrundegelegt wird,

   dadurch gekennzeichnet,

   daß es zur Ermittlung des Momentanwertes der Ansprechenergie die Schritte enthält:

   a) Erfassen der vorhandenen Fahrzeugverzögerung als Grund-Fahrzeugverzögerung (a0);

   b) Zufuhr einer Energie (p1) zu der betreffenden Bremse (A);

   c) Erfassen der nach der Zufuhr der Energie (p1) vorhandenen Fahrzeugverzögerung als Test-Fahrzeugverzögerung (a1);

   d) Vergleichen der Grund-Fahrzeugverzögerung (a0) und der Test-Fahrzeugverzögerung (a1);

   e) ergibt der Vergleich, daß die Test-Fahrzeugverzögerung (a1) um mehr als einen vorbestimmten Toleranzwert (s) größer als die Grund-Fahrzeugverzögerung (a0) ist, Wiederholen der Schritte a) bis d) mit verringerter Energie (p1), bis die Differenz zwischen Test-Fahrzeugverzögerung (a1) und Grund-Fahrzeugverzögerung (a0) auf höchstens den vorbestimmten Toleranzwert (s) geschrumpft ist;

f) ergibt der Vergleich, daß die Test-Fahrzeugverzögerung (a1) gleich der Grund-Fahrzeugverzögerung (a0) oder kleiner als die Grund-Fahrzeugverzögerung (a0) ist, Wiederholen der Schritte a) bis d) mit erhöhter Energie (p1), bis die Test-Fahrzeugverzögerung (a1) die Grund-Fahrzeugverzögerung (a0) um höchstens den vorbestimmten Toleranzwert (s) übersteigt.

2. Verfahren zur Abbremsung eines Fahrzeugs mit wenigstens zwei durch Zufuhr von Energie betätigten Bremsen (M, A), welches die Verteilung der Energie auf die Bremsen (M, A) nach Maßgabe der Ansprechenergien der Bremsen vornimmt, wobei Energie einen Sammelbegriff für alle Medien bedeutet, bei deren Zuführung eine Bremse eine Bremskraft erzeugt und wobei der Verteilung der Energie der bei wenigstens einer Bremsbetätigung ermittelte Momentanwert der Ansprechenergie wenigstens einer der Bremsen zugrundegelegt wird,
dadurch gekennzeichnet,
daß es zur Ermittlung des Momentanwertes der Ansprechenergie die Schritte enthält:

a) Zufuhr einer Energie (p1) zu der betreffenden Bremse (A);

b) Erfassen der nach der Zufuhr der Energie (p1) vorhandenen Fahrzeugverzögerung als Test-Fahrzeugverzögerung (a1);

c) Energieentlastung der Bremse (A);

d) Erfassen der jetzt vorhandenen Fahrzeugverzögerung als Grund-Fahrzeugverzögerung (a0);

e) Vergleichen der Grund-Fahrzeugverzögerung (a0) und der Test-Fahrzeugverzögerung (a1);

f) ergibt der Vergleich, daß die Test-Fahrzeugverzögerung (a1) um mehr als einen vorbestimmten Toleranzwert (s) größer als die Grund-Fahrzeugverzögerung (a0) ist, Wiederholen der Schritte a) bis e) mit verringerter Energie (p1), bis die Differenz zwischen Test-Fahrzeugverzögerung (a1) und Grund-Fahrzeugverzögerung (a0) auf höchstens den vorbestimmten Toleranzwert (s) geschrumpft ist;

g) ergibt der Vergleich, daß die Test-Fahrzeugverzögerung (a1) gleich der Grund-Fahrzeugverzögerung (a0) oder kleiner als die Grund-Fahrzeugverzögerung (a0) ist, Wiederholen der Schritte a) bis e) mit erhöhter Energie (p1), bis die Test-Fahrzeugverzögerung (a1) die Grund-Fahrzeugverzögerung (a0) um höchstens den vorbestimmten Toleranzwert (s) übersteigt.

3. Verfahren zur Abbremsung eines Fahrzeugs mit wenigstens zwei durch Zufuhr von Energie betätigten Bremsen (M, A), welches die Verteilung der Energie auf die Bremsen (M, A) nach Maßgabe der Ansprechenergien der Bremsen vornimmt, wobei Energie einen Sammelbegriff für alle Medien bedeutet, bei deren Zuführung eine Bremse eine Bremskraft erzeugt und wobei der Verteilung der Energie der bei wenigstens einer Bremsbetätigung ermittelte Momentanwert der Ansprechenergie wenigstens einer der Bremsen zugrundegelegt wird,
dadurch gekennzeichnet,
daß es zur Ermittlung des Momentanwertes der Ansprechenergie die Schritte enthält:

a) Erfassen der vorhandenen Fahrzeugverzögerung als Grund-Fahrzeugverzögerung (a0);

b) Zufuhr

ba) einer ersten Energie (p1) zu der Bremse (A), deren Momentanwert der Ansprechenergie zu ermitteln ist, als erster Bremse,

bb) wenigstens einer zweiten Energie (p15, p20) zu der vorhandenen wenigstens einen zweiten Bremse (M);

c) Energieentlastung der wenigstens einen zweiten Bremse (M);

d) Aufrechterhalten der ersten Energie (p1) für eine vorbestimmte Nachlaufzeit (tn);

e) während der Nachlaufzeit (tn) Erfassen der vorhandenen Fahrzeugverzögerung als Test-Fahrzeugverzögerung (a1);

f) Vergleichen der Grund-Fahrzeugverzögerung (a0) und der Test-Fahrzeugverzögerung (a1);

g) ergibt der Vergleich, daß die Test-Fahrzeugverzögerung (a1) um mehr als einen vorbestimmten Toleranzwert (s) größer als die Grund-Fahrzeugverzögerung (a0) ist, Wiederholen der Schritte a) bis f) mit verringerter Energie (p1), bis die Differenz zwischen Test-Fahrzeugverzögerung (a1) und Grund-Fahrzeugverzögerung (a0) auf höchstens den vorbestimmten Toleranzwert (s) geschrumpft ist;

h) ergibt der Vergleich, daß die Test-Fahrzeugverzögerung (a1) gleich der Grund-Fahrzeugverzögerung (a0) oder kleiner als die Grund-Fahrzeugverzögerung (a0) ist, Wiederholen der Schritte a) bis f) mit erhöhter Energie (p1), bis die Test-Fahrzeugverzögerung (a1) die Grund-Fahrzeugverzögerung (a0) um höchstens den vorbestimmten Toleranzwert (s) übersteigt.

4. Verfahren zur Abbremsung eines Fahrzeugs mit wenigstens zwei durch Zufuhr von Energie betätigten Bremsen (M, A), welches die Verteilung der Energie auf die Bremsen (M, A) nach Maßgabe der Ansprechenergien der Bremsen vornimmt, wobei Energie einen Sammelbegriff für alle Medien bedeutet, bei deren Zuführung eine Bremse eine Bremskraft erzeugt und wobei der Verteilung der Energie der bei wenigstens einer Bremsbetätigung ermittelte Momentanwert der Ansprechenergie wenigstens einer der Bremsen zugrundegelegt wird,
<u>dadurch gekennzeichnet,</u>
daß es zur Ermittlung des Momentanwertes der Ansprechenergie die Schritte enthält:

    a) Zufuhr

        aa) einer ersten Energie (p1) zu der Bremse, deren Momentanwert der Ansprechenergie zu ermitteln ist, als erster Bremse,
        ab) wenigstens einer zweiten Energie (p15, p20) zu der vorhandenen wenigstens einen zweiten Bremse (M);

    b) Energieentlastung der wenigstens einen zweiten Bremse (M);

    c) Aufrechterhalten der ersten Energie (p1) für eine vorbestimmte Nachlaufzeit (tn);

    d) während der Nachlaufzeit (tn) Erfassen der vorhandenen Fahrzeugverzögerung als Test-Fahrzeugverzögerung (a1);

    e) nach Ablauf der Nachlaufzeit (tn) Erfassen der vorhandenen Fahrzeugverzögerung als Grund-Fahrzeugverzögerung (a0);

    f) Vergleichen der Grund-Fahrzeugverzögerung (a0) und der Test-Fahrzeugverzögerung (a1);

g) ergibt der Vergleich, daß die Test-Fahrzeugverzögerung (a1) um mehr als einen vorbestimmten Toleranzwert (s) größer als die Grund-Fahrzeugverzögerung (a0) ist, Wiederholen der Schritte a) bis f) mit verringerter Energie (p1), bis die Differenz zwischen Test-Fahrzeugverzögerung (a1) und Grund-Fahrzeugverzögerung (a0) auf höchstens den vorbestimmten Toleranzwert (s) geschrumpft ist;

h) ergibt der Vergleich, daß die Test-Fahrzeugverzögerung (a1) gleich der Grund-Fahrzeugverzögerung (a0) oder kleiner als die Grund-Fahrzeugverzögerung (a0) ist, Wiederholen der Schritte a) bis f) mit erhöhter Energie (p1), bis die Test-Fahrzeugverzögerung (a1) die Grund-Fahrzeugverzögerung (a0) um höchstens den vorbestimmten Toleranzwert (s) übersteigt.

5. Verfahren nach einem der Ansprüche 1 oder 2, wobei das Fahrzeug ein Fahrzeugzug mit einem Motorwagen und einem Anhänger, eine Bremse eine Anhängerbremsanlage (A), die wenigstens eine zweite Bremse eine Motorwagenbremsanlage (M) und die Energie (p1) der von der Motorwagenbremsanlage (M) an die Anhängerbremsanlage (A) abgegebene Anhängerbremsdruck sind.

6. Verfahren nach einem der Ansprüche 3 oder 4, wobei das Fahrzeug ein Fahrzeugzug mit einem Motorwagen und einem Anhänger, die erste Bremse eine Anhängerbrems-anlage (A), die wenigstens eine zweite Bremse eine Motorwagenbremsanlage (M) und die erste Energie (p1) der von der Motorwagenbremsanlage (M) an die Anhänger-bremsanlage (A) abgegebene Anhängerbremsdruck sind.

**Claims**

1. Method for braking a vehicle having at least two brakes (M, A) actuated by supplying energy, in which method the energy is distributed to the brakes (M, A) as a function of the response energies of the brakes, wherein energy is understood as being a collective term for any medium on the supply of which a brake generates a braking force and wherein the distribution of the energy is based on the instantaneous value of the response energy of at least one of the brakes, the instantaneous value being determined on at least one brake actuation, <u>characterised in that,</u>
for determination of the instantaneous value of the response energy, the method comprises the steps:

    a) ascertaining, as the basic vehicle deceleration (a0), the vehicle deceleration present;

b) supplying energy (p1) to the brake in question (A);

c) ascertaining, as the vehicle deceleration on testing (a1), the vehicle deceleration present after the supply of energy (p1);

d) comparing the basic vehicle deceleration (a0) and the vehicle deceleration on testing (a1);

e) if the result of the comparison is that the vehicle deceleration on testing (a1) is greater than the basic vehicle deceleration (a0) by more than a pre-determined tolerance value (s), repeating steps a) to d) using reduced energy (p1) until the difference between the vehicle deceleration on testing (a1) and the basic vehicle deceleration (a0) has decreased to not more than the pre-determined tolerance value (s);

f) if the result of the comparison is that the vehicle deceleration on testing (a1) is equal to the basic vehicle deceleration (a0) or less than the basic vehicle deceleration (a0), repeating steps a) to d) using increased energy (p1) until the vehicle deceleration on testing (a1) exceeds the basic vehicle deceleration (a0) by not more than the pre-determined tolerance value (s).

2. Method for braking a vehicle having at least two brakes (M, A) actuated by supplying energy, in which method the energy is distributed to the brakes (M, A) as a function of the response energies of the brakes, wherein energy is understood as being a collective term for any medium on the supply of which a brake generates a braking force and wherein the distribution of the energy is based on the instantaneous value of the response energy of at least one of the brakes, the instantaneous value being determined on at least one brake actuation, characterised in that, for determination of the instantaneous value of the response energy, the method comprises the steps:

a) supplying energy (p1) to the brake in question (A);

b) ascertaining, as the vehicle deceleration on testing (a1), the vehicle deceleration present after the supply of energy (p1);

c) relieving the brake (A) of energy;

d) ascertaining, as the basic vehicle deceleration (a0), the vehicle deceleration now present;

e) comparing the basic vehicle deceleration (a0) and the vehicle deceleration on testing (a1);

f) if the result of the comparison is that the vehicle deceleration on testing (a1) is greater than the basic vehicle deceleration (a0) by more than a pre-determined tolerance value (s), repeating steps a) to e) using reduced energy (p1) until the difference between the vehicle deceleration on testing (a1) and the basic vehicle deceleration (a0) has decreased to not more than the pre-determined tolerance value (s);

g) if the result of the comparison is that the vehicle deceleration on testing (a1) is equal to the basic vehicle deceleration (a0) or less than the basic vehicle deceleration (a0), repeating steps a) to e) using increased energy (p1) until the vehicle deceleration on testing (a1) exceeds the basic vehicle deceleration (a0) by not more than the pre-determined tolerance value (s).

3. Method for braking a vehicle having at least two brakes (M, A) actuated by supplying energy, in which method the energy is distributed to the brakes (M, A) as a function of the response energies of the brakes, wherein energy is understood as being a collective term for any medium on the supply of which a brake generates a braking force and wherein the distribution of the energy is based on the instantaneous value of the response energy of at least one of the brakes, the instantaneous value being determined on at least one brake actuation, characterised in that, for determination of the instantaneous value of the response energy, the method comprises the steps:

a) ascertaining, as the basic vehicle deceleration (a0), the vehicle deceleration present;

b) supplying

ba) a first energy (p1) to the brake (A) for which the instantaneous value of the response energy is to be determined, as the first brake,

bb) at least one second energy (p15, p20) to the second brake (M) present, of which there is at least one;

c) relieving the second brake (M), of which there is at least one, of energy;

d) maintaining the first energy (p1) for a pre-determined follow-on period (tn);

e) ascertaining, during the follow-on period (tn), as the vehicle deceleration on testing (a1), the vehicle deceleration present;

f) comparing the basic vehicle deceleration (a0) and the vehicle deceleration on testing (a1);

g) if the result of the comparison is that the vehicle deceleration on testing (a1) is greater than the basic vehicle deceleration (a0) by more than a pre-determined tolerance value (s), repeating steps a) to f) using reduced energy (p1) until the difference between the vehicle deceleration on testing (a1) and the basic vehicle deceleration (a0) has decreased to not more than the pre-determined tolerance value (s);

h) if the result of the comparison is that the vehicle deceleration on testing (a1) is equal to the basic vehicle deceleration (a0) or less than the basic vehicle deceleration (a0), repeating steps a) to f) using increased energy (p1) until the vehicle deceleration on testing (a1) exceeds the basic vehicle deceleration (a0) by not more than the pre-determined tolerance value (s).

4. Method for braking a vehicle having at least two brakes (M, A) actuated by supplying energy, in which method the energy is distributed to the brakes (M, A) as a function of the response energies of the brakes, wherein energy is understood as being a collective term for any medium on the supply of which a brake generates a braking force and wherein the distribution of the energy is based on the instantaneous value of the response energy of at least one of the brakes, the instantaneous value being determined on at least one brake actuation, <u>characterised in that,</u> for determination of the instantaneous value of the response energy, the method comprises the steps:

a) supplying

aa) a first energy (p1) to the brake for which the instantaneous value of the response energy is to be determined, as the first brake,

ab) at least one second energy (p15, p20) to the second brake (M) present, of which there is at least one;

b) relieving the second brake (M), of which there is at least one, of energy;

c) maintaining the first energy (p1) for a pre-determined follow-on period (tn);

d) ascertaining, during the follow-on period (tn), as the vehicle deceleration on testing (a1), the vehicle deceleration present;

e) ascertaining, after the end of the follow-on period (tn), as the basic vehicle deceleration (a0), the vehicle deceleration present;

f) comparing the basic vehicle deceleration (a0) and the vehicle deceleration on testing (a1);

g) if the result of the comparison is that the vehicle deceleration on testing (a1) is greater than the basic vehicle deceleration (a0) by more than a pre-determined tolerance value (s), repeating steps a) to f) using reduced energy (p1) until the difference between the vehicle deceleration on testing (a1) and the basic vehicle deceleration (a0) has decreased to not more than the predetermined tolerance value (s);

h) if the result of the comparison is that the vehicle deceleration on testing (a1) is equal to the basic vehicle deceleration (a0) or less than the basic vehicle deceleration (a0), repeating steps a) to f) using increased energy (p1) until the vehicle deceleration on testing (a1) exceeds the basic vehicle deceleration (a0) by not more than the predetermined tolerance value (s).

5. Method according to either claim 1 or claim 2, wherein the vehicle is a vehicle train having a motor vehicle and a trailer, one brake is a trailer braking system (A), the second brake, of which there is at least one, is a motor vehicle braking system (M), and the energy (p1) is the trailer braking pressure delivered from the motor vehicle braking system (M) to the trailer braking system (A).

6. Method according to either claim 3 or claim 4, wherein the vehicle is a vehicle train having a motor vehicle and a trailer, the first brake is a trailer braking system (A), the second brake, of which there is at least one, is a motor vehicle braking system (M), and the first energy (p1) is the trailer braking pressure delivered from the motor vehicle braking system (M) to the trailer braking system (A).

## Revendications

1. Procédé pour freiner un véhicule comportant au moins deux freins (M, A) actionnés par amenée d'énergie, qui assure la répartition de l'énergie sur les freins (M, A) en fonction des énergies de réaction des freins, dans lequel l'énergie est une expression collective pour tous les fluides lors de l'admission desquels un frein génère une force de freinage, et dans lequel la valeur momentanée, détectée lors d'au moins un actionnement de frein, de l'énergie de réaction de l'un au moins des freins, est prise comme base pour la répartition de l'énergie,
caractérisé en ce que
pour détecter la valeur momentanée de l'énergie de réaction, il inclut les étapes suivantes :

> a) on détecte la décélération réelle du véhicule en tant que décélération de véhicule de base (a0) ;
> b) on amène de l'énergie (p1) au frein correspondant (A),
> c) on détecte la décélération réelle de véhicule après l'amenée d'énergie (p1), en tant que décélération test (a1) ;
> d) on compare la décélération de base (a0) et la décélération test (a1) ;
> e) lorsque la comparaison donne pour résultat que la décélération test (a1) est supérieure de plus d'une valeur de tolérance prédéterminée (s) à la décélération de base (a0), on répète les étapes a) à d) avec une énergie réduite (p1), jusqu'à ce que la différence entre la décélération test (a1) et la décélération de base (a0) soit réduite au maximum à la valeur de tolérance prédéterminée (s) ;
> f) lorsque la comparaison donne pour résultat que la décélération test (a1) est égale à la décélération de base (a0) ou inférieure à la décélération de base (a0), on répète les étapes a) à d) avec une énergie augmentée (p1), jusqu'à ce que la décélération test (a1) dépasse la décélération de base (a0) au maximum de la valeur de tolérance prédéterminée (s).

2. Procédé pour freiner un véhicule comportant au moins deux freins (M, A) actionnés par amenée d'énergie, qui assure la répartition de l'énergie sur les freins (M, A) en fonction des énergies de réaction des freins, dans lequel l'énergie est une expression collective pour tous les fluides lors de l'admission desquels un frein génère une force de freinage et dans lequel la valeur momentanée, détectée lors d'au moins un actionnement de frein, de l'énergie de réaction de l'un au moins des freins est prise comme base pour la répartition de l'énergie, caractérisé en ce que pour détecter la valeur momentanée de l'énergie de réaction, il inclut les étapes suivantes :

> a) on amène une énergie (p1) au frein correspondant (A),
> b) on détecte la décélération réelle du véhicule après l'amenée d'énergie (p1), en tant que décélération test (a1) ;
> c) on décharge le frein (A) de son énergie ;
> d) on détecte la décélération réelle actuelle du véhicule en tant que décélération de base (a0) ;
> e) on compare la décélération de base (a0) et la décélération test (a1) ;
> f) lorsque la comparaison donne pour résultat que la décélération test (a1) est supérieure de plus d'une valeur de tolérance prédéterminée (s) à la décélération de base (a0), on répète les étapes a) à d) avec une énergie réduite (p1), jusqu'à ce que la différence entre la décélération test (a1) et la décélération de base (a0) soit réduite au maximum à la valeur de tolérance prédéterminée (s) ;
> f) lorsque la comparaison donne pour résultat que la décélération test (a1) est égale à la décélération de base (a0) ou inférieure à la décélération de base (a0), on répète les étapes a) à d) avec une énergie augmentée (p1), jusqu'à ce que la décélération test (a1) dépasse la décélération de base (a0) au maximum de la valeur de tolérance prédéterminée (s).

3. Procédé pour freiner un véhicule comportant au moins deux freins (M, A) actionnés par amenée d'énergie, qui assure la répartition de l'énergie sur les freins (M, A) en fonction des énergies de réaction des freins, dans lequel l'énergie est une expression collective pour tous les fluides lors de l'admission desquels un frein génère une force de freinage et dans lequel la valeur momentanée, détectée lors d'au moins un actionnement de frein, de l'énergie de réaction de l'un au moins des freins est prise comme base pour la répartition de l'énergie,
caractérisé en ce que
pour détecter la valeur momentanée de l'énergie de réaction, il inclut les étapes suivantes :

> a) on détecte la décélération réelle en tant que décélération de base (a0) ;
> b) on amène
>
> > ba) une première énergie (p1) au frein (A), en tant que premier frein, dont on doit détecter la valeur momentanée de l'énergie de réaction,

bb) au moins une seconde énergie (p15, p20) audit au moins un second frein (M) ;

c) on décharge ledit au moins un second frein (M) de son énergie ;

d) on maintient la première énergie (p1) pour un temps de retard prédéterminé (tn) ;

e) pendant le temps de retard (tn), on détecte la décélération réelle en tant que décélération test (a1) ;

f) on compare la décélération de base (a0) et la décélération test (a1) ;

g) lorsque la comparaison donne pour résultat que la décélération test (a1) est supérieure de plus d'une valeur de tolérance prédéterminée (s) à la décélération de base (a0), on répète les étapes a) à d) avec une énergie réduite (p1), jusqu'à ce que la différence entre la décélération test (a1) et la décélération de base (a0) soit réduite au maximum à la valeur de tolérance prédéterminée (s) ;

h) lorsque la comparaison donne pour résultat que la décélération test (a1) est égale à la décélération de base (a0) ou inférieure à la décélération de base (a0), on répète les étapes a) à d) avec une énergie augmentée (p1), jusqu'à ce que la décélération test (a1) dépasse la décélération de base (a0) au maximum de la valeur de tolérance prédéterminée (s).

4. Procédé pour freiner un véhicule comportant au moins deux freins (M, A) actionnés par amenée d'énergie, qui assure la répartition de l'énergie sur les freins (M, A) en fonction des énergies de réaction des freins, dans lequel l'énergie est une expression collective pour tous les fluides lors de l'admission desquels un frein génère une force de freinage et dans lequel la valeur momentanée, détectée lors d'au moins un actionnement de frein, de l'énergie de réaction de l'un au moins des freins est prise comme base pour la répartition de l'énergie,
caractérisé en ce que
pour détecter la valeur momentanée de l'énergie de réaction, il inclut les étapes suivantes :

a) on amène

aa) une première énergie (p1) au frein, en tant que premier frein, dont on doit détecter la valeur momentanée de l'énergie de réaction,
ab) au moins une seconde énergie (p15, p20) audit au moins un second frein (M) ;

b) on décharge ledit au moins un second frein (M) de son énergie ;

c) on maintient la première énergie (p1) pour un temps de retard prédéterminé (tn) ;

d) pendant le temps de retard (tn), on détecte la décélération réelle en tant que décélération test (a1) ;

e) après écoulement du temps de retard (tn), on détecte la décélération réelle en tant que décélération de base (a0) ;

f) on compare la décélération de base (a0) et la décélération test (a1) ;

g) lorsque la comparaison donne pour résultat que la décélération test (a1) est supérieure de plus d'une valeur de tolérance prédéterminée (s) à la décélération de base (a0), on répète les étapes a) à d) avec une énergie réduite (p1), jusqu'à ce que la différence entre la décélération test (a1) et la décélération de base (a0) soit réduite au maximum à la valeur de tolérance prédéterminée (s) ;

h) lorsque la comparaison donne pour résultat que la décélération test (a1) est égale à la décélération de base (a0) ou inférieure à la décélération de base (a0), on répète les étapes a) à d) avec une énergie augmentée (p1), jusqu'à ce que la décélération test (a1) dépasse la décélération de base (a0) au maximum de la valeur de tolérance prédéterminée (s).

5. Procédé selon l'une ou l'autre des revendications 1 et 2, dans lequel le véhicule est un train routier comportant une motrice et une remorque, le frein est une installation de freinage de remorque (A), ledit au moins un second frein est une installation de freinage de motrice (M), et l'énergie (p1) est la pression de frein de remorque fournie par l'installation de freinage de motrice (M) vers l'installation de freinage de remorque (A).

6. Procédé selon l'une ou l'autre des revendications 3 ou 4, dans lequel le véhicule est un train routier comportant une motrice et une remorque, le premier frein est une installation de freinage de remorque (A), ledit au moins un second frein est une installation de freinage de motrice (M), et la première énergie (p1) est la pression de frein de remorque fournie par l'installation de freinage de motrice (M) vers l'installation de freinage de remorque (A).

FIG. 1

FIG.2

FIG.3

EP 0 733 531 B1